Europäisches Patentamt

European Patent Office

Office européen des brevets

(19)

(11) Numéro de publication: **0 316 224**
**A1**

## (12) DEMANDE DE BREVET EUROPEEN

(21) Numéro de dépôt: 88402790.5

(22) Date de dépôt: 07.11.88

(51) Int. Cl.4: **B 32 B 17/10**
**C 03 C 27/12**

(30) Priorité: 12.11.87 FR 8715624

(43) Date de publication de la demande:
17.05.89 Bulletin 89/20

(84) Etats contractants désignés:
AT BE CH DE ES FR GB IT LI LU NL SE

(71) Demandeur: SAINT-GOBAIN VITRAGE
Les Miroirs 18, avenue d'Alsace
F-92400 Courbevoie (FR)

(72) Inventeur: Orain, Roger
La Lisière du Golf 2 Rue du Colonel de Rochebrune
F-92380 Garches (FR)

Triffaux, Francis
12 Route Nationale
F-60150 Thourotte (FR)

Moncheaux, Michel Jean
9 Rue des Sablons
F-60200 Compiègne (FR)

(74) Mandataire: Muller, René et al
SAINT-GOBAIN RECHERCHE 39, quai Lucien Lefranc-BP 135
F-93303 Aubervilliers Cédex (FR)

(54) Dispositif pour l'assemblage des vitrages feuilletés.

(57) L'invention concerne un dispositif pour l'assemblage des vitrages feuilletés (1) par pressage des éléments constitutifs desdits vitrages feuilletés.

Le dispositif comprend un support (2) de forme adaptée à la géométrie du vitrage assurant le maintien du vitrage, un ensemble presseur (3) muni de moyens lui permettant de se déplacer selon une direction du vitrage à assembler, l'ensemble presseur s'étendant au-dessus du support transversalement par rapport à la direction du déplacement sur une distance au moins égale à la largeur du vitrage à assembler, et étant disposé pour épouser le profil transversal du vitrage.

FIG. 2

EP 0 316 224 A1

## Description

## DISPOSITIF POUR L'ASSEMBLAGE DES VITRAGES FEUILLETES

L'invention est relative à l'assemblage de feuilles de verre et/ou de matières plastiques pour former un vitrage feuilleté.

L'assemblage des vitrages feuilletés s'effectue généralement par un pressage préliminaire des éléments constitutifs du vitrage feuilleté, par calandrage suivi d'un cycle d'autoclave qui améliore l'adhésion entre les éléments et assure un assemblage définitif.

Pour les vitrages feuilletés "traditionnels" dont les deux faces extérieures sont formées d'éléments rigides, par exemple deux feuilles de verre, on utilise généralement un dispositif comprenant deux séries superposées de galets disposés les uns à côtés des autres, leur position pouvant être réglée indépendemment les uns des autres, de façon à obtenir la courbure transversale désirée.

Si ce dispositif s'applique parfaitement bien à la fabrication d'un vitrage feuilleté dont les deux faces extérieures sont rigides, il n'en est pas de même lorsqu'il s'agit d'assembler une feuille souple avec un support rigide pour former un vitrage asymétrique comme décrit par exemple dans les publications de brevets français 2 187 719, 2 398 606, et européens 0 132 198, 0 131 523. On observe alors de nombreuses bulles d'air dans le vitrage, dans les bandes correspondant aux espaces entre galets voisins de la série de galets qui agit sur la feuille souple.

Pour assembler ce type de vitrage feuilleté dit asymétrique en évitant les bulles d'air, on a déjà proposé dans la publication de brevet européen 0 015 209 un dispositif comprenant : des moyens inférieurs de pinçage disposés suivant une courbure, sensiblement celle d'une courbure de la face inférieure du vitrage à assembler transversalement à sa direction de déplacement ; un rouleau presseur cylindrique, souple, disposé au-dessus des moyens inférieurs de pinçage, s'étendant sur une longueur au moins égale à la largeur des éléments à assembler, c'est-à-dire au moins égale à la dimension transversale des éléments à assembler par rapport à leur direction de déplacement ; des moyens supérieurs s'appuyant sur le rouleau presseur pour lui donner la courbure désirée, sensiblement celle d'une courbure de la face supérieure du vitrage à assembler transversalement à sa direction de déplacement, qui le maintiennent dans sa position de travail à une distance des moyens inférieurs, légèrement inférieure à l'épaisseur totale des éléments à assembler ou même nulle; des moyens assurant l'entraînement en rotation du rouleau presseur et/ou d'une partie ou de la totalité des moyens inférieurs de pinçage.

Ce dispositif donne entière satisfaction pour la plupart des vitrages, mais la feuille souple qui peut être assemblée avec le support rigide doit être présentée à l'assemblage sous la forme d'un ruban continu.

Un autre inconvénient est que ce dispositif est difficilement utilisable pour l'assemblage de vitrages fortement cintrés dans le sens de la longueur qui correspond au sens du déplacement.

L'invention propose un dispositif qui obvie aux inconvénients cités et qui s'applique parfaitement bien à l'assemblage préliminaire ou définitif des vitrages feuilletés, qu'ils soient "traditionnels" ou "asymétriques", de formes complexes avec différents rayons de courbure fortement cintrés ou non, comme décrit précédemment.

Le dispositif selon l'invention, comprend un support, de forme adaptée à la géométrie du vitrage, assurant le maintien du vitrage, un ensemble supérieur presseur muni de moyens lui permettant de se déplacer dans les deux sens selon une direction du vitrage, cet ensemble presseur s'étendant au dessus du support, transversalement à la direction du déplacement, en épousant le profil transversal du vitrage, l'ensemble presseur, au moins, étant articulé afin que les efforts de pressage s'exercent sensiblement perpendiculairement à la surface du vitrage durant tout le pressage.

Selon une caractéristique avantageuse du dispositif, le support est monté pivotant, au moins autour d'un axe transversal par rapport à la direction du déplacement.

Les pivotements des moyens supérieurs de pressage associés aux pivotements du support assurent le maintien des efforts de pressage dans une direction qui reste essentiellement perpendiculaire à la surface du vitrage durant tout le déplacement des moyens supérieurs de pressage pendant l'opération d'assemblage.

Selon une réalisation du dispositif, l'ensemble presseur est un ensemble de galets montés au bout de systèmes élastiques, tels des ressorts ou des vérins exerçant une force de pressage sur la face supé rieure du vitrage, et disposés selon une courbure sensiblement égale à la courbure du profil transversal du vitrage.

Dans une variante, l'ensemble presseur est un rouleau cylindrique presseur souple, notamment formé d'au moins une couche de caoutchouc vulcanisé, et cintré par des moyens s'appuyant sur lui, pour lui donner toute courbure désirée, correspondant sensiblement au profil de la face supérieure du vitrage à assembler, transversalement à sa direction de déplacement et qui maintiennent le rouleau presseur dans sa position de travail au contact de la face supérieure du vitrage.

Selon une caractéristique du dispositif l'ensemble supérieur presseur est monté au bout de moyens se déplaçant le long de rail disposé dans la direction du déplacement.

Selon une autre caractéristique du dispositif, l'ensemble supérieur presseur est monté au bout de moyens assurant la mobilité en rotation afin d'exercer un effort perpendiculaire à la surface du vitrage au cours du déplacement de l'ensemble presseur. Les moyens assurant la mobilité en rotation et le déplacement de l'ensemble presseur est selon un aspect de l'invention le bras d'un robot industriel.

Selon une autre caractéristique du dispositif, le support est avantageusement monté pivotant autour de plusieurs axes perpendiculaires à la direction du déplacement de l'ensemble presseur, par exemple autour de deux axes dont il peut s'échapper.

Selon une réalisation du dispositif, le support est en outre monté pivotant autour d'un axe longitudinal.

L'ensemble des pivotements dont peut être muni le support selon l'invention permet d'envisager l'assemblage de vitrages de formes très complexes.

Le support peut être un cadre soutenant une partie au moins de la périphérie du vitrage, en particulier les deux extrémités.

Dans une variante, le support est une forme pleine ou essentiellement pleine qui soutient le vitrage en tout point, sur toute sa surface ou sur la partie essentielle de sa surface. Cette forme peut être constituée d'un même matériau ou de plusieurs matériaux de duretés différentes, pour compenser notamment les différences entre les efforts de pressage d'un endroit à un autre.

Afin de facilité le centrage et d'améliorer le maintien du vitrage durant l'opération d'assemblage, la forme présente une empreinte sur laquelle se place le vitrage et qui n'en émerge donc que d'une partie de son épaisseur.

La forme s'étend avantageusement d'au moins un côté du vitrage sur une longueur permettant le positionnement correct de l'ensemble presseur à un moment ou l'autre de l'opération d'assemblage. On peut ainsi aussi prévoir des moyens de maintien de la feuille à assembler.

Un autre avantage du dispositif selon l'invention est qu'il permet d'utiliser aussi bien une feuille de longueur indéfinie qu'une feuille découpée en primitif dans le cas de l'assemblage d'un vitrage asymétrique.

D'autres avantages et caractéristiques du dispositif selon l'invention apparaitront dans la suite de la description d'exemples de réalisations faite en référence aux figures.

La figure 1 est une représentation schématique en vue de face d'une réalisation du dispositif pour l'assemblage de vitrage feuilleté traditionnel dont les deux faces extérieures sont formées d'éléments rigides.

La figure 2 est une vue de côté du dispositif de la figure 1.

La figure 3 est une représentation schématique en vue de face d'une réalisation du dispositif pour l'assemblage d'un vitrage feuilleté asymétrique, constitué d'un support rigide et d'une feuille souple en matière plastique.

La figure 4 est une vue de côté du dispositif de la figure 3.

La figure 5 est une représentation schématique en vue de côté, d'une variante du dispositif de la figure 1.

La figure 6 est une repésentations schématique en vue de côté, d'une variante du dispositif selon laquelle le moyen assurant la mobilité et le déplacement de l'ensemble presseur est le bras d'un robot industriel.

La figure 7 est une représentation schématique d'une autre réalisation du dispositif utilisant un support articulé autour d'un axe longitudinal et d'un axe transversal.

La figure 8 est une représentation en position de sortie d'assemblage du dispositif de la figure 7.

La figure 9 est une représentation schématique d'une ature réalisation du dispositif utilisant un support articulé autour d'un axe longitudinal et de deux axes transversaux.

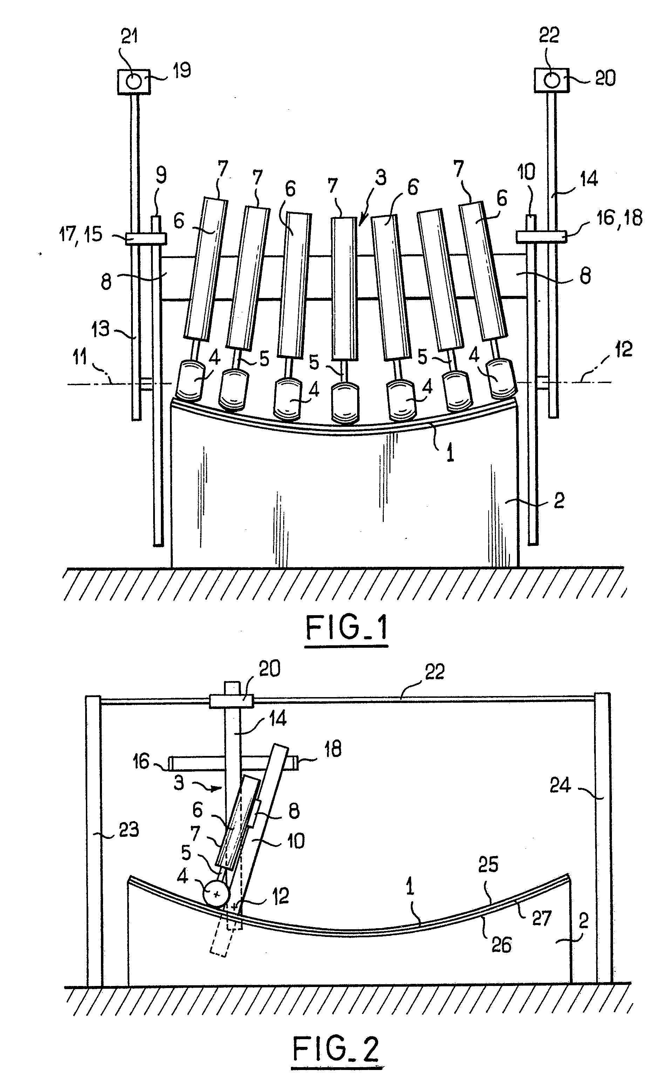

Sur les figures 1 et 2, le vitrage à assembler 1 repose sur un support plein 2, qui épouse la forme du vitrage. L'ensemble presseur supérieur 3 est constitué d'une série de galets presseurs 4, montés chacun au bout de la tige 5 d'un vérin 6. Le corps 7 de chaque vérin est monté réglable en hauteur et en orientation sur une barre transversale 8 s'étendant sur toute la largeur du dispositif. La barre transversale 8 est fixée au bout de deux montants 9, 10.

L'ensemble presseur 3 peut pivoter librement autour d'axes horizontaux 11, 12, réglables en hauteur, situés au niveau du plan du vitrage 1. Les axes 11, 12 traversent respectivement les montants 9, 10 et des montants verticaux 13, 14. La rotation de l'ensemble presseur 3 autour des axes 11, 12 est limitée par des butées mécaniques 15, 16, 17, 18 fixées sur les montants 13, 14. L'ensemble est équilibré par des contrepoids non représentés, et avantageusement de manière à placer le centre de gravité de l'ensemble presseur sensiblement au niveau de la ligne de pressage.

Les montants verticaux 13, 14 sont fixés au bout de deux coulisseaux 19, 20 qui sont montés coulissant le long de deux rails horizontaux 21, 22 s'étendant longitudinalement et supportés par des poutres 23, 24.

Dans une version du dispositif, la position en hauteur des axes 11, 12 est commandée par des vérins.

Ce dispositif est utilisé pour assembler par exemple un vitrage feuilleté formé de deux feuilles 25, 26 de verre et d'un intercalaire 27. Il fonctionne de la manière suivante. On règle au préalable le niveau de chaque vérin par rapport à la barre transversale 8. On place le vitrage 1 sur le support 2. L'empreinte du vitrage est avantageusement marquée dans le support, ce qui facilite le placement correct du vitrage et permet le maintien du vitrage lors de l'assemblage. Par déplacement de l'ensemble presseur, on applique une force de pressage due à l'action des galets poussés par les vérins sur la face supérieure du vitrage. Le déplacement s'effectue d'un bord à l'autre du vitrage à partir d'une extrémité ou d'une position médiane.

Le support est avantageusement équipé d'éléments chauffants qui par conduction chauffe le vitrage afin d'améliorer l'adhésion des éléments entre-eux.

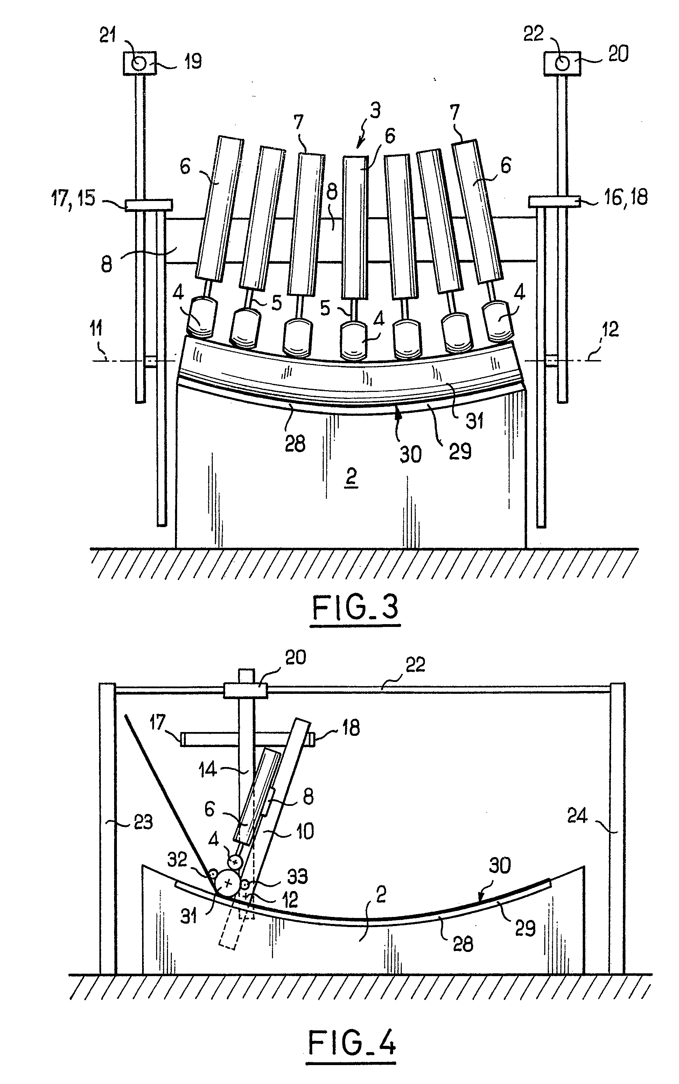

Sur les figures 3 et 4, le vitrage à assembler 28, est constitué d'un élément monolithique ou feuilleté rigide 29 et d'une feuille de matière plastique souple 30, par exemple la feuille décrite dans la publication du brevet européen 0 133 090, conférant au vitrage les propriétés désirées telles que des propriétés d'absorbeur d'énergie, des propriétés de surface, comme résistance à la rayure, à l'abrasion etc... Le dispositif pour l'assemblage comprend les mêmes moyens que précédemment, mais en outre, il est équipé d'un rouleau cylindrique presseur souple 31, d'un diamètre de l'ordre de 10 centimètres environ qui s'étend sur toute la largeur du dispositif et qui est cintré sous l'action d'une série de galets presseurs. Le rouleau presseur cylindrique est formé d'une ou plusieurs couches de caoutchouc vulcanisé. Deux rouleaux d'appui 32, 33 peuvent venir s'appliquer en amont et en aval sur le rouleau presseur et l'empêcher de s'échapper de l'action des galeurs presseurs supérieurs. La feuille de matière plastique 30 qui doit recouvrir l'élément rigide pour former le vitrage fait partie dans cet exemple de réalisation d'un ruban de longueur indéfinie. Elle est amenée par le dessus du dispositif tout en étant constamment maintenue tendue par un dispositif de tension non représenté.

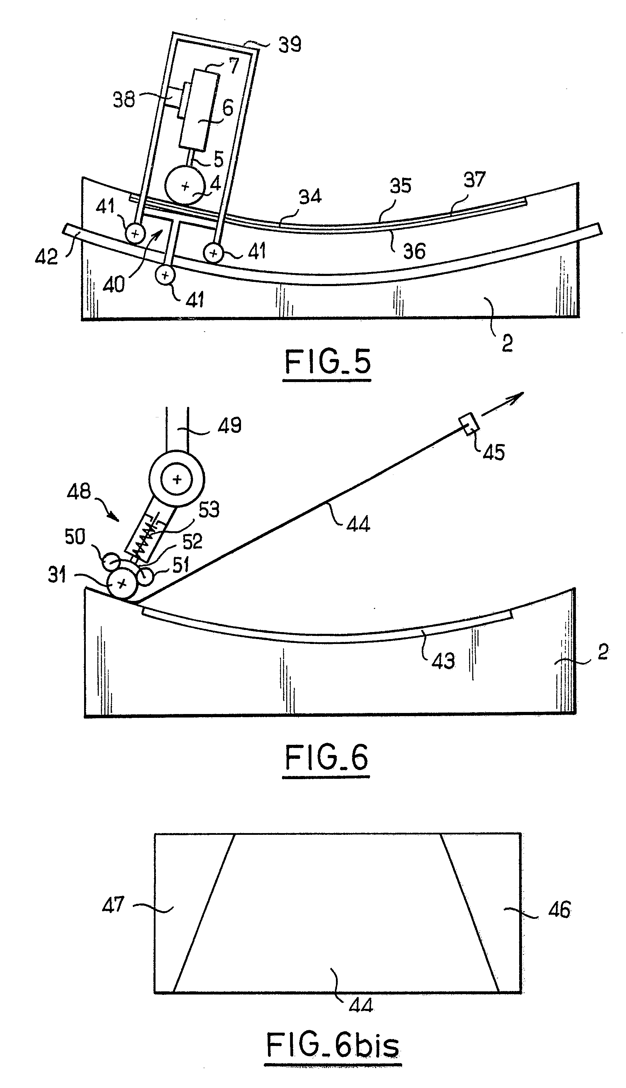

La figure 5 représente une variante du dispositif. Dans cet exemple, le vitrage feuilleté à assembler 34 est constitué de deux feuilles de verre 35, 36 et d'un intercalaire 37. L'ensemble presseur est constitué comme précédemment d'un ensemble de galets presseurs 4, montés chacun au bout de la tige 5 d'un vérin 6. Le corps 7 de chaque vérin est monté réglable en hauteur et en orientation, sur une barre transversale 38, s'étendant sur toute la largeur du dispositif. Chacun des bouts de la barre transversale 38 est fixé à un chariot 39 qui se déplace pour suivre les courbures du support et du vitrage. Sur le chariot de l'ensemble presseur est monté un dispositif de guidage 40 muni par exemple de roulettes 41 qui suivent la courbure de deux rails 42 de forme adaptée à celle du vitrage disposé de chaque côté du support 2.

Le dispositif représenté sur la figure 6 est utilisé pour l'assemblage d'un vitrage asymétrique formé d'un élément rigide 43, généralement en verre, et d'une feuille de matière plastique 44.

Dans ce dispositif, la feuille se présente sous la forme d'un primitif découpé au préalable approximativement au format du vitrage à fabriquer. Une extrémité de la feuille est pincée dans le support 2 dans sa partie amont en dehors des limites du vitrage. L'autre extrémité est tenue sur toute sa largeur par un système de pincement 45, qui la maintien tendue à distance du support. Le dispositif de tension n'est par représentée sur la figure 6.

La feuille de matière plastique 44 peut avoir un format rectangulaire ou, avantageusement, un format trapézoïdal. Dans ce cas, deux éléments 46, 47 en forme de trapèze rectangle, découpés dans une matière moins onéreuse de même épaisseur ou d'épaisseur inférieure à celle de la feuille 44, peuvent être fixés, au moyen d'agraffes ou de ruban adhésif, aux deux extrémités de la feuille 44, afin de constituer, avec la feuille 44, un rectangle de dimension adéquat. Une telle feuille peut être facilement manipulée. Elle est fixée d'une part au support 2 et d'autre part au système de pincement 45 par ses extrémités 46, 47. La figure 6 bis représente une telle feuille.

Dans le dispositif représenté sur la figure 6, l'ensemble presseur 48 est monté articulé au bout d'un bras 49 d'un robot industriel non représenté. La partie agissante est constituée d'un rouleau souple 31 cintré sous l'action de deux séries de galets 50, 51 montés au bout de tiges 52 actionnées par des ressorts 53.

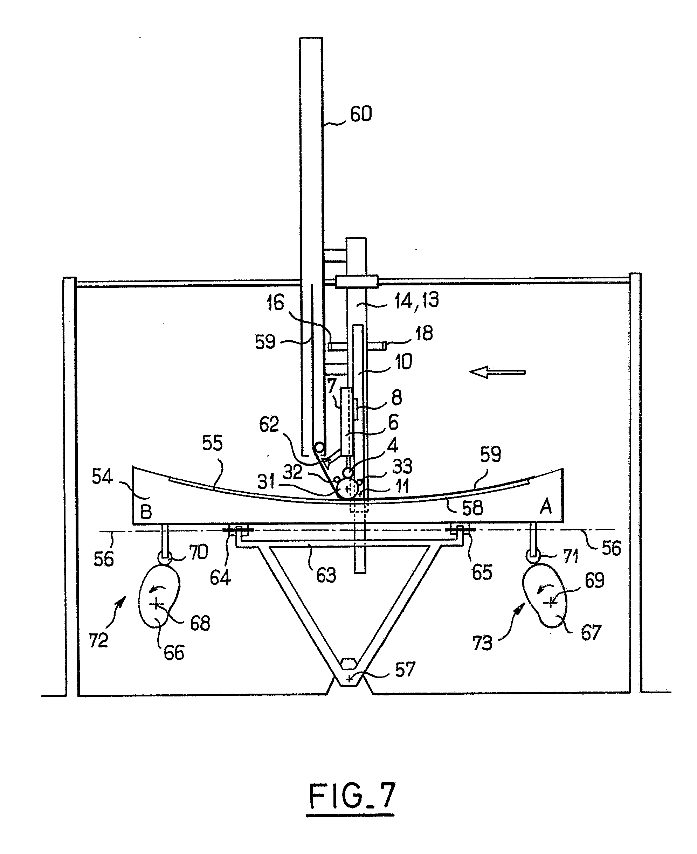

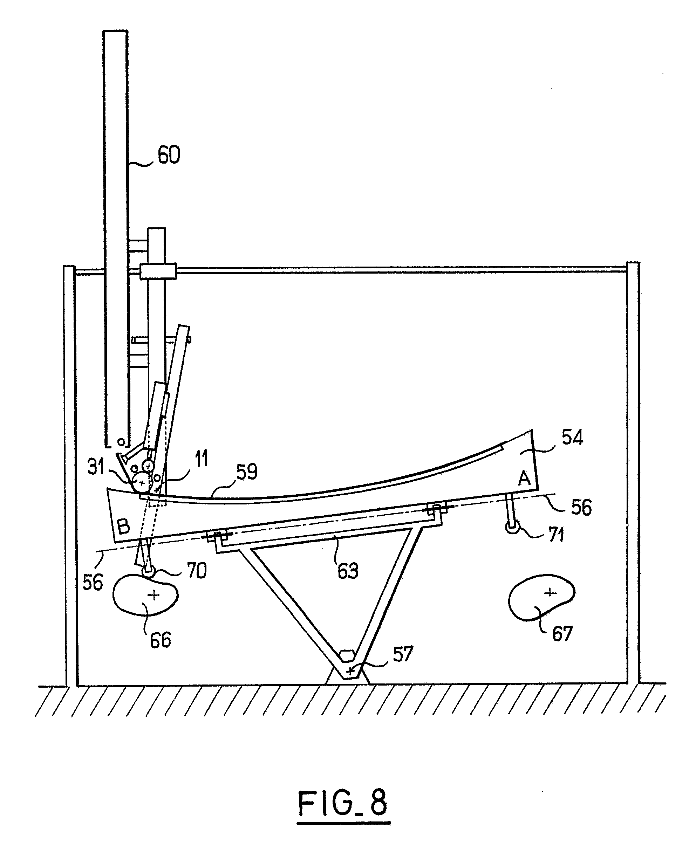

Les figures 7 et 8 représentent une variante d'un dispositif selon l'invention qui est équipé d'un support 54 de forme adaptée à la forme de vitrage à assembler 55, pouvant basculer autour d'un axe longitudinal 56 et autour d'un axe transversal 57. Dans cet exemple le vitrage à assembler est un vitrage feuilleté asymétrique constitué d'une feuille rigide généralement en verre 58 et d'une feuille de matière plastique 59.

Dans ce dispositif, la feuille 59 se présente sous la forme d'un primitif découpé au préalable approximativement au format du vitrage à fabriquer. Elle a été au préalable enfermée dans une cassette 60 dans laquelle est elle maintenue tendue par exemple à l'aide de molettes (non représentée sur la figure) disposées latéralement sur toute la longueur de la cassette.

La cassette peut éventuellement être équipée de moyens de nettoyage qui combinent les opérations d'essuyage, de raclage, d'aspiration en même temps que l'on décharge la feuille de son électricité statique.

La cassette peut contenir une ou plusieurs feuilles 59 disposées parallèlement et maintenues légèrement distantes les unes des autres.

La cassette est chargée sur l'ensemble presseur avant l'opération d'assemblage. Elle est fixée, en position verticale, sur le devant de l'ensemble presseur, par un moyen approprié, clipage par exemple, en prenant appui sur les montants 13 et 14. La cassette 60 est retirée lorsqu'elle est vide, pour être rechargée avec des formats de films en matière plastique.

L'ensemble presseur 61 comprend les mêmes moyens que ceux montrés sur les figures 3 et 4, mais en outre, il est équipé d'un système de préhension 62, s'étendant sur toute la largeur du dispositif, destinés à tenir et guider la feuille 59 à l'avant du rouleau souple 31. La feuille peut glisser sans dommage sur ce système. Ce système de préhension peut être obtenu, par exemple, au moyen d'une aspiration agissant sur toute la largeur de la feuille ou encore par placage électrostatique.

Le support 54 est en équilibre sur un axe longitudinal 56 au moyen de paliers 64, 65, fixés sur une platine 63, elle-même en équilibre sur un axe horizontal transversal 57.

L'axe 56 est situé dans le plan vertical médian traversant le support 54 dans le sens du déplacement.

Le support 54 peut librement pivoter autour de l'axe 56 sous l'effet de la pression exercée par le rouleau souple 31 quelque soit la position de ce dernier le long du vitrage 55.

Au niveau de chacune des extrémités du support 54 est installé un dispositif de soutien 72, 73, à hauteur variable commandée en fonction de la position de l'ensemble presseur sur le vitrage à assembler. Ce dispositif de soutien permet d'assurer de façon convenable une contre-pression adéquate, sans s'opposer au déplacement de l'ensemble presseur. Les dispositifs de soutien 72, 73 peuvent être obtenus, par exemple, au moyen de vérins ou de cames.

Les figures 7 et 8 montrent des dispositifs de soutien réalisés au moyen de cames de formes adaptées au vitrage. Les deux cames 66, 67 situés dans le plan vertical, longitudinal, médian du support 54, tournent autour des axes 68, 69 horizontaux disposés à distance fixe de l'axe 57. Le support 54 s'appuie sur l'une ou l'autre des cames, en fonction de la position de l'ensemble presseur sur le vitrage, au moyen des galets 70, 71.

Le dispositif fonctionne de la façon suivante :

L'ensemble presseur est en position de départ à l'extrémité A du support 54. Une cassette de film 60 est fixée par clipage sur le devant de l'ensemble presseur. La came 67 est en position basse. Le support est en appui sur la came 67, par l'intermédiaire du galet 71, et sur l'axe 57. Il n'est pas en appui sur la came 66. Le support est alors en position inclinée.

Le déplacement depuis l'extrémité A jusqu'à la position médiane, de l'ensemble presseur commande la rotation des cames 66 et 67 de telle sorte qu'elles atteignent leur position haute au moment où l'ensemble presseur atteint la position médiane. Le support 54 vient au contact de la came 66 par l'intermédiaire du galet 70 (fig. 7). Le support est alors horizontal. Le déplacement se poursuit vers l'extrémité B et entraine une rotation des cames. Le galet 71 quitte la came 67. Le support, de plus en plus incliné, est alors en appui sur l'axe 57 et sur la came 66. Ainsi, qu'elle qu'ait été la position de l'ensemble presseur sur le vitrage, une contre-pression appropriée a toujours été assurée . De même, les efforts exercés par le rouleau souple 31 ont toujours agit sensiblement perpendiculairement au plan tangent.

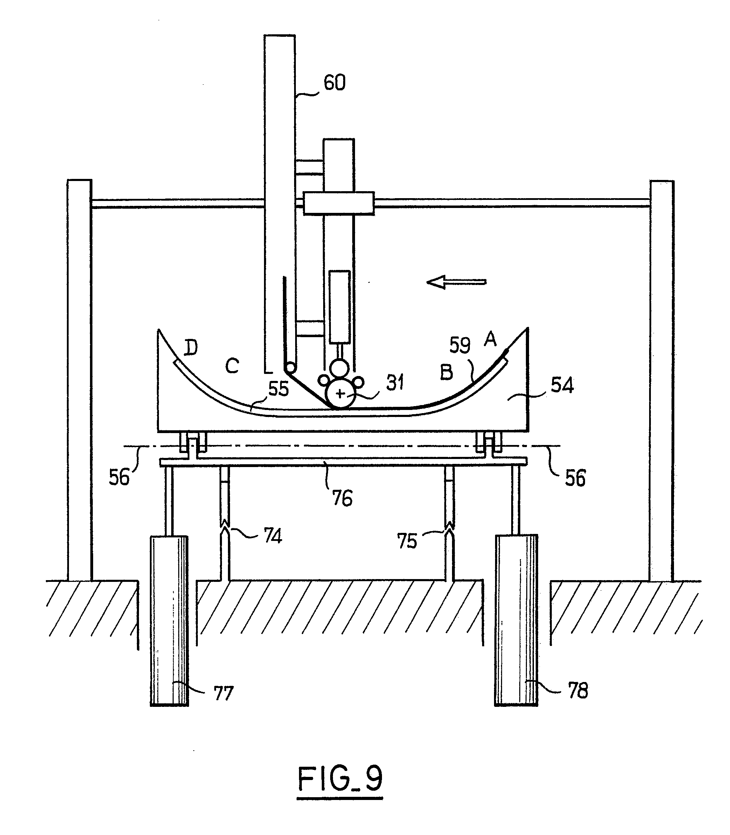

La figure 9 montre une autre variante du dispositif selon l'invention, qui est utilisée pour l'assemblage d'un vitrage feuilleté asymétrique comme le dispositif précédent.

Le support 54, de forme adaptée au vitrage à assembler 55, peut basculer autour d'un axe longitudinal 56 et autour de deux axes transversaux 74 et 75 dont il peut s'échapper. Aux extrémités du support, deux systèmes de soutien à hauteur variable commandée en fonction de la position de l'ensemble presseur sur le vitrage, appuient sur la platine 76. Ces systèmes de soutien sont par exemples des vérins ou des cames. La figure 9 montre un système de vérins 77, 78.

Le dispositif fonctionne de la façon suivante :

Entre la position de départ A, et la position B, au droit de l'axe 75, le support est incliné. Il est tenu par le vérin 78, en position basse, par l'axe transversal 75 et par le vérin 77 en position haute. Entre les positions B et C, le support est horizontal. Il est en appui sur les deux axes transversaux 75 et 74. Les varins 77, 78 sont à l'arrêt, en position intermédiaire. Au delà de la position C, le déplacement de l'ensemble presseur entraine de nouveau le basculement du support qui est alors en appui sur l'axe transversal 74, sur le vérin 77 et sur le vérin 78.

## Revendications

1. Dispositif pour l'assemblage des vitrages feuilletés par pressage des éléments constitutifs desdits vitrages feuilletés, caractérisé en ce qu'il comprend un support de forme adaptée à la géométrie du vitrage assurant le maintien du vitrage, un ensemble presseur muni de moyens lui permettant de se déplacer selon une direction du vitrage à assembler, l'ensemble presseur s'étendant au-dessus du support transversalement par rapport à la direction du déplacement sur une distance au moins égale à la largeur du vitrage à assembler, et étant disposé pour épouser le profil transversal du vitrage, l'ensemble presseur, au moins, étant articulé afin que les efforts de pressage s'exercent sensiblement perpendiculairement à la surface du vitrage durant tout le pressage.

2. Dispositif selon la revendication 1, caractérisé en ce que le support est monté pivotant autour d'au moins un axe transversal par rapport à la direction du déplacement de l'ensemble presseur.

3. Dispositif selon une des revendications 1 ou 2, caractérisé en ce que l'ensemble presseur comprend une série de galets montés au bout de systèmes élastiques exerçant une force de pressage sur la face supérieure du vitrage à assembler.

4. Dispositif selon la revendication 1 ou 2, caractérisé en ce que l'ensemble presseur comprend un rouleau presseur souple et des moyens appuyant sur le rouleau presseur pour lui donner toute courbure désirée, sensiblement celle d'une courbure de la face supérieure du vitrage à assembler et qui le maintiennent dans sa position de travail.

5. Dispositif selon une des revendications 1 à 4, caractérisé en ce que le support est une forme pleine sur laquelle repose le vitrage à assembler.

6. Dispositif selon la revendicaiton 5, caractérisé en ce que la forme présente une empreinte dans laquelle se place le vitrage.

7. Dispositif selon une des revendications 1 à 6, caractérisé en ce que le support est monté pivotant autour d'un axe longitudinal.

8. Dispositif selon une des revendications 2 à 7, caractérisé en ce que le support est monté pivotant autour de deux axes transversaux desquels il peut s'échapper.

9. Dispositif selon la revendication 8, caractérisé en ce que le support comprend deux systèmes de soutien à hauteur variable commandée en fonction de la position de l'ensemble presseur sur le vitrage.

10. Dispositif selon la revendication 9, caractérisé en ce que les systèmes de soutien sont des vérins ou des cames.

11. Dispositif selon une des revendications 1 à 10, caractérisé en ce que l'ensemble presseur est actionné par un robot industriel.

12. Dispositif selon une des revendications 1 à 10, caractérisé en ce que l'ensemble presseur est monté pivotant autour d'un axe transversal et qu'il est guidé par l'intermédiaire de coulisseaux le long de rails longitudinaux.

13. Dispositif selon une des revendications 1 à 12, caractérisé en ce que le support se prolonge de part et d'autre du vitrage dans la direction longitudinale.

14. Dispositif selon une des revendications 4 à 13, caractérisé en ce que le support est constitué de matériaux différents.

15. Dispositif pour l'assemblage des vitrages feuilletés asymétriques, selon une des revendications 1 à 14, caractérisé en ce que la feuille en matière plastique est contenue dans une cassette rechargeable portée par l'ensemble presseur.

16. Dispositif pour l'assemblage de vitrages feuilletés asymétriques, selon une des revendications 1 à 15, caractérisé en ce que la feuille souple est un format trapézoïdal, auquel on a ajouté deux éléments afin de constituer une feuille rectangulaire.

FIG_1

FIG_2

FIG.3

FIG.4

FIG.5

FIG.6

FIG.6bis

EP  0 316 224  A1

FIG_7

FIG_8

## FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 068 104  (E.H. HAUX)<br>* Page 1, colonne de gauche, lignes 32-39; page 2, colonne de gauche, lignes 27-60; figures 1,4,5 *<br>--- | 1,4,14 | B 32 B  17/10<br>C 03 C  27/12 |
| D,X | EP-A-0 015 209  (SAINT-GOBAIN)<br>* Page 4, lignes 9-17; page 5, lignes 15-39; page 6, lignes 9-25; figures 1-6 *<br>--- | 2,3,12 | |
| A | US-A-4 679 291  (SCHMEAL et al.)<br>* Figures 1,2; colonne 3, lignes 10-39 *<br>----- | | |

DOMAINES TECHNIQUES
RECHERCHES (Int. Cl.4)

B 32 B
C 03 C
B 29 C

Le présent rapport a été établi pour toutes les revendications

| Lieu de la recherche | Date d'achèvement de la recherche | Examinateur |
|---|---|---|
| LA HAYE | 14-02-1989 | VAN BELLEGHEM W.R. |